# EUROPEAN PATENT APPLICATION

(11) **EP 0 560 480 A2**
(43) Date of publication of application: **15.09.1993**
(21) Application number: 93300741.1
(22) Date of filing: 02.02.1993
(51) Int. Cl.: B65G 23/06, B65G 23/04, B65G 17/08

(54) **Drive means for slat conveyors**

(30) Priority: 20.02.1992 GB 9203698
(71) Applicant: MCG TECHNO PACK LIMITED, Walsall West Midlands WS2 7NQ (GB)
(72) Inventor: Wood, Dennis Alan, Wombourne, Wolverhampton WV5 0JE (GB)
(74) Representative: Stebbing, Peter John Hunter

(57) **Abstract**

The present invention provides a slat conveyor (1) comprising a conveyor belt (2), and endless belt of slats (4) in operative interconnection with each other for translational movement along the bed and an assembly of drive means (20) for imparting motion in said belt (2)and at least one idler wheel (13). The invention is characterised in that the drive means (20) is provided with a contact surface (22) for operative engagement with the lower face of each successive slat (4), said contact surface comprising a layer of a resilient energy absorbing material. By providing energy absorbative material at the point of maximum noise generation in a slat conveyor noise levels may be readily reduced below 85 dBA.

## Description

The present invention relates to slat conveyors generally of the type used for the transport of bottles, cans, cartons and crates. In a factory location such conveyors may be controlled to transport articles in either multi-lane or single file for de-palletizing, washing, filing, capping, pasteurizing, labelling and packing.

There are two main causes of noise in bottling lines utilising such conveyors. Although the application is subsequently described with reference to bottling lines, it will be appreciated that the invention relates to slat conveyors whenever used for any purpose.

In bottling lines it is known that one of the causes of noise is from bottles knocking and jostling together and another cause of noise is the translational movement of the conveyors themselves. In a typical bottling line, there are numerous separate driven conveyor belts and hence it is unsurprising that the noise levels in bottling plants are high.

The present invention is adapted to simply reduce the running noise of a slat conveyor for use, for example, in all areas of bottling and canning lines.

Slat conveyors are made of a metal or a hard-wearing plastics material generally having a rectangular cross-sectional slat with a planar upper face. Each slat is conjoined to an adjacent slat to form an endless conveyor; generally the slats are conjoined along their longer edges by a knuckle hinge on the under surface to allow pivotal movement bewteen adjacent slats.

The knuckle hinge rides in a suitable channel in the conveyor bed, whereby weight exerted upon the upper face of the slat is readily transferred to the conveyor bed via a wear strip contacting the under surface of the slat.

The endless belt of slats is driven by, for example, an electric motor by means of a drive sprocket or similar arrangement at one end and an idler wheel or sprocket at the other end. We have found that a significant cause of noise arises from the sequential contact of the slats with the idler or sprocket wheels. In particular, significant components of noise generation are caused by the lower edges of the flaps slapping onto the idler or sprocket or other drive wheels. This effect is amplified if there is an element of wear in the pivotal inter-connection between the slats, since the slats tend to be driven by centrifugal force against wear strips set adjacent the outer edges of the flaps as they exit from the idler or sprocket wheel locations. This further accentuates the noise.

Typically unloaded slat conveyors have a noise in the range of 60-80 dBA. We have now found that noise levels can be significantly reduced by up to 10 dBA or even more by utilising an energy absorbing material as the contact surface between the slats and the idler or sprocket wheel.

GB-A-788802 provides a slat conveyor comprising a conveyor bed, an endless belt comprising slats in operative interconnection with each other for translational movement along the bed, and an assembly of drive means for imparting motion to said belt and at least one idler wheel.

However in this disclosure the slats are supported on a endless rubber belt which, while it does reduce noise, is also subject to wear. It follows that repair of a worn belt involves in practice a complete replacement.

Further since the Applicants have discovered that a major source of noise arises at the contact point between the drive and the slats, it follows that noise can be most economically reduced by measures directed at the contact point itself.

The present invention is characterised in that the drive means is provided with a contact surface for operative engagement with the lower face of each successive slat, said contact surface comprising a layer of a resilient energy absorbing material.

In a preferred form of the invention each contact surface, overlaid by a discrete energy absorbing element, may be suitably positioned on the underside of each slat for contact with the drive assembly.

In a more preferred form of the invention, however, the energy absorbing material is in the form of a continuous or discontinuous 'O' ring disposed about the circumference of at least one element of the drive assembly, for contact with the underside of each slat.

Preferably the energy absorbing material may be formed of an annulus having a circular ovoid or flat cross-sectional configuration, optionally with a further convex or concave outward profile, adapted to be a contact surface. In this latter circumstance the energy absorbing material is preferably formed in an annulus for co-operation with a suitable annular channel member of the drive assembly.
The energy absorbing material may be retained in a channel disposed on the circumference member of the drive assembly; preferably the energy absorbing material is in the form of an 'O' ring disposed respectively adjacent each edge of the circumferential surface of a member of the drive assembly.

In an alternative embodiment the energy absorbing material itself is formed into an idler wheel or sprocket or other drive means for contact with the underside of the slats.

In another form of the invention the energy absorbing material may be a discontinuous plurality of strips parallel to the drive axis of the assembly and displaced about the periphery thereof. The energy absorbing material may be polyurethane, natural or synthetic rubber, or a polyurethane foam or any similar resilient material. Materials may be selected, for example, from polyurethane foam manufactured by Volta; a thermo plastics material having a shore hardness of about 80A. Polyurethane foam material manufactured by "Redthane" as belting is also suitable and has a shore hardness of 50 to 90A. A further material which may be utilised is a foam rubber strip of a terpolymer of ethylene, propylene and a diene (EPDM) with a hardness of 50 to 70 international rubber hardness durometer units (IRHD).

In another form of the invention, the energy absorbing material may be of a rectangular cross-section, and be mounted in a groove or channel in a drive sprocket or idler wheel so as to come into contact with the knuckle hinge of the slats.

It has been found by means of the arrangement shown above that noise reductions of up to 10dBA, and in some circumstances even as much as 15 dBA, can be achieved which considerably reduces the noise levels generated in bottling lines.

Although we cannot be sure why the arrangements of the present invention result in such a significant noise reduction, we offer the following explanation of a possible mechanism on a non-limitative basis.

As stated above, the sound generated by the slats as they come into contact with, for example, the idler wheel, has a number of components. After some experimentation we found that an important component of the noise generated by a conveyor is that generated by contact between the idler wheel and the slats. As a slat approaches the idler or sprocket wheel and comes into contact with it generates a click. Similarly, when it leaves the roller it generates a second click, probably caused by centrifugal overthrow of the slat until restrained by the pivotal connection between the preceding slat. Each click generates energy which is dissipated as sound either directly as a sound wave to air, or via the energy absorbing plastics material and the idler wheel.

The sound-to-air wave is the most important to dissipate. This has been done by absorbing as much energy as possible, having regard to possible wear considerations, in the energy absorbing material. The invention is so designed that all variations of energy absorbing material can be quickly and easily replaced should wear occur over long periods; typically 12 months.
Figure 1 shows a plan view from above of a typical slat chain of the prior art,
Figure 2 shows a vertical section through a typical conveyor showing the slat,
Figures 3 and 4 show respectively an elevation and a vertical section through a sprocket wheel and an idler wheel of the prior art,
Figure 5 shows a vertical cross-section through a drive sprocket of the invention,
Figure 6 shows a vertical cross-section through an alternative drive sprocket of the invention,
Figure 7 shows a diagrammatic side elevation from above of a conveyor in accordance to the present invention,
Figure 8 shows a side elevation, part exploded, of a conveyer of Figure 7, and
Figure 9 shows a vertical cross section through the idler wheel assembly of Figure 8.

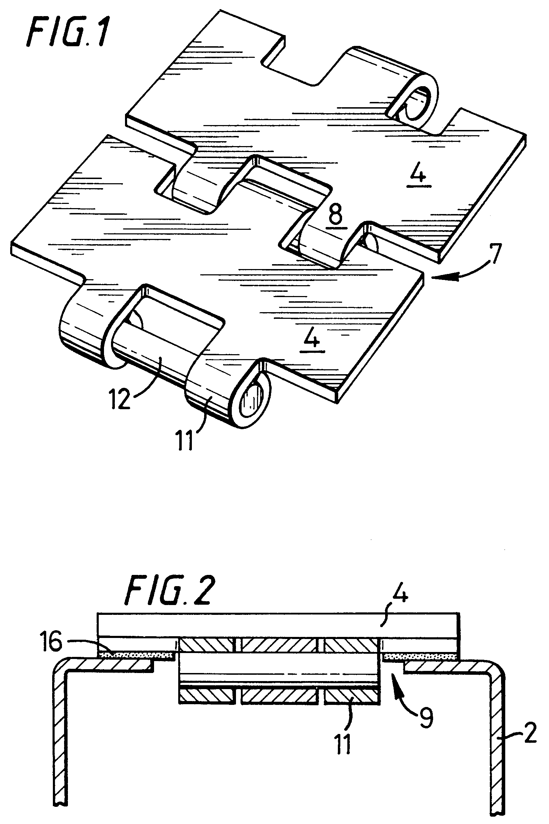

Turning first to Figure 1, a typical assembly of slats for an endless conveyer assembly comprises a generally planar slat (4) formed with a knuckle hinge (11) through which passes a pivot pin (12). It will be noted that a pivot interlock for the slat (8) allows succeeding slats (4) to interlock for pivotal movement. The arrangement is further shown in Figure 2. Typically slats (4) move along a conveyer bed (9) sliding on wear strips (16). It will be noted that the knuckle hinge (11) is free to ride in the conveyer belt (9) which is formed on the upper surface of the casing (2).

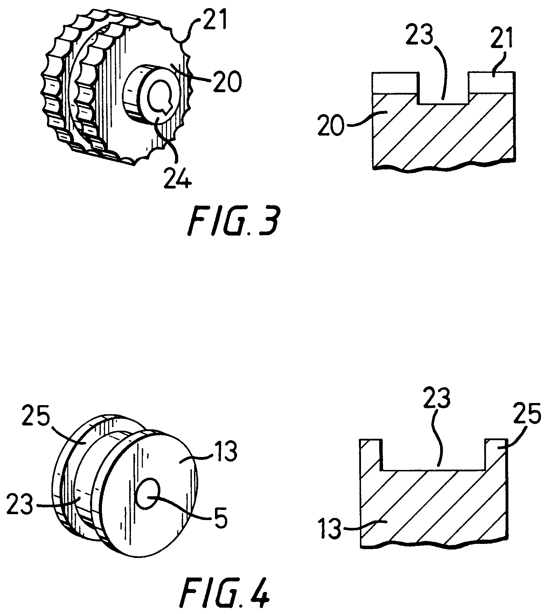

Figure 3 shows a typical drive sprocket of the prior art. Drive sprocket (20) is provided with teeth profiles (21) that contact the knuckle joint (11) referred to above. The drive sprocket is driven by a shaft (24) provided with a keywayed bore passing axially therethrough. A groove (23) is provided between adjacent pairs of sprocket wheels (20).

Similarly with regard to Figure 4 an idler wheel is provided with a central body disposed upon an idler axle (5) and provided adjacent each end with a guide ring (25) to define the groove (23).

These arrangements of the prior art operate efficiently, if somewhat noisely.

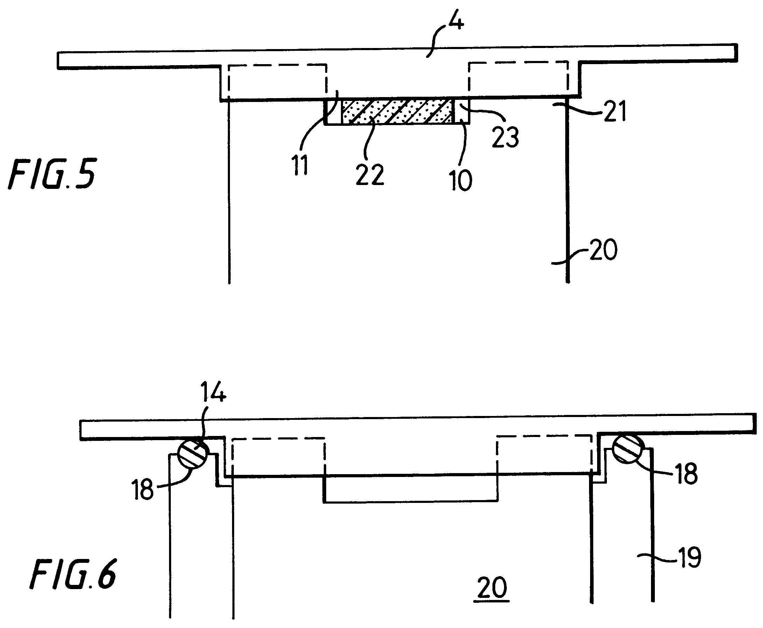

With reference to Figures 5 and 6 there are provided alternative embodiments of sprocket wheel assemblies in accordance to the present invention.

With reference to Figure 5 a sprocket wheel (20) supports endless slats (4) in accordance with the prior art. The underside of the slat (4) is provided with a knuckle hinge (11) which engages with the sprocket wheel teeth (21). It is apparent that by these means the knuckle hinge (11) is driven about the sprocket (20) to impart translational movement thereto.

The groove (23) formed between the sprocket wheel teeth (21) is in this embodiment of the invention, provided with a compressible foam ring (22) of a depth sufficient such that when the knuckle hinge (11) comes into contact therewith, the foam is compressed and hence energy and noise is absorbed by the ring (22). Alternatively, or additionally, the arrangement of Figure 6 may be adopted. In this arrangement the sprocket wheel (20) is provided on its annular faces with a carrier disc (19) which is bolted to the body of the sprocket wheel (20). The carrier (19) disc is provided on its circumferential periphery with an annular groove or channel (18) which accommodates an 'O' ring (14) of polyurethane material, for example "Redthane" as previously discussed.

In both the arrangements of Figures 5 and 6 the drive sprocket comes into contact with the slats of the endless conveyer with a minimum of noise as will be discussed later.

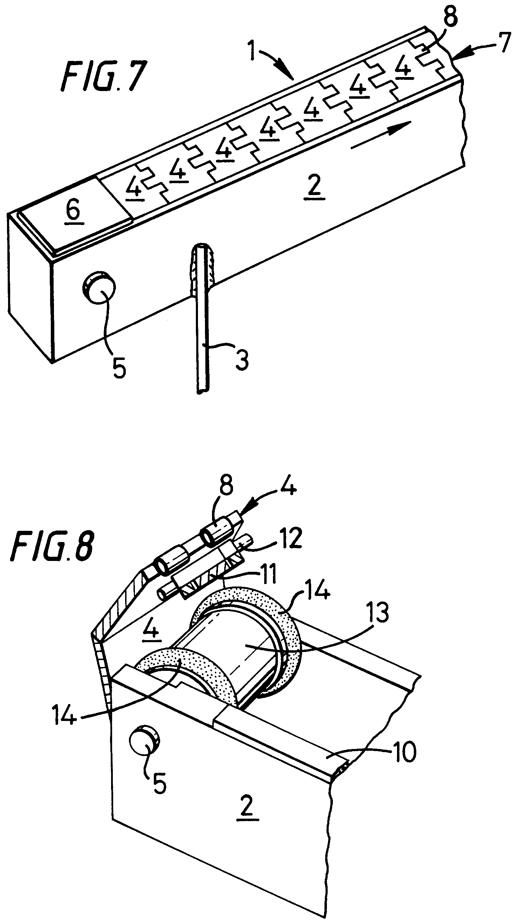

In Figure 7, a conveyor shown generally at (1) is provided with a generally rectilinear casing (2) supported on a plurality of legs (3). The upper edge of the casing (2) has a common upper surface with the endless conveyor (7) comprising a plurality of the pivotally interconnected slats (4) having a planar upper surface. The slats (4) move along the conveyor (1) in the direction of the arrow 'A'. A sprocket wheel (20), shown more clearly in Figures 5 or 6, isprovided upon an axle (5 or 24) disposed perpendicular to the axis of the conveyor (1). The sprocket or idler wheel is covered by means of a protector plate (6) disposed above said axle (5) and over the point at which the slats (4) pass on to the bed (10) of the conveyor (1).

Shown more particularly in Figure 8 is an arrangement of Figure 7 with the major portion of the slats (4) removed, with the last slat (4) hinged upwardly away from the conveyor (1) to show the idler wheel assembly.

The conveyor (2) is formed with a frame encompassing a track (10) defined by a wear strip (16) situated adjacent the edges thereof and extending longitudinally of the casing (2) beneath the slats (4). The idler axle (5) supports an idler wheel (13) (the sprocket axle is shown in Figures 5 and 6), provided in this particular instance with a pair of peripherally disposed 'O' rings (14) disposed upon upstanding guide ring portions of the idler wheel (13) to provide an idler wheel groove (15) for purposes to be discussed later. The idler wheel (13) is not driven, but merely rotates either about the axle (5) or with the axle where the axle is mounted on a bearing, in response to movement of the endless conveyor (7) of slats (4).

As is clearly shown in Figure 8, the underside of each slat (4) is provided with a knuckle hinge (11) for co-operation in use in the track (10), previously described. The front edge of the slat (4) is provided with an interlock (8) for the slats, through which a pin (12) passes to secure the slat (4) to the adjacent slat (4) in known fashion.

Wear strip (16) is situated adjacent the forward edge of the idler wheel (13) to ensure the underside of the outer portion of the slats do not impinge upon the casing, and acts as a guide for the slats to run therebetween.

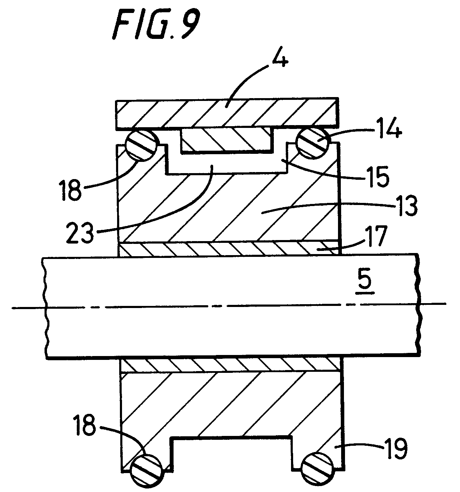

As best seen in Figure 9, the idler wheel (13) is disposed upon a bush (17) which in turn is disposed upon the idler axle (5). The idler wheel (13) is provided with flange or carrier disc portions (19) to provide an idler wheel groove (15) whereby the slat roller (11) is accommodated within the idler wheel (13). Situate on the upper portions of the flange (19) in the idler wheel (13) are channels (18) to accommodate 'O' rings (14) of a resilient polyurethane material such as "Redthane". As can be seen clearly at the upper portion in Figure 9, the slat (4) as it rides over the idler wheel (13) will compress the 'O' ring (14) due to its flat shape.

As can be seen best from Figures 5, 6, 8 and 9, the movement of the slats (4) in the endless conveyor (7) about the idler wheel (13) causes the slats to move sequentially over the idler wheel (13), or the sprocket wheel (20) and hence over the 'O' rings (14) and/or the foam ring (22). The 'O' rings or foam absorb the initial energy from contact with each succeeding slat (4) and absorb the centrifugal energy as the rear end of the slat moves towards the wear strip (16). Accordingly, although some noise is experienced, the noise levels are much reduced.

In order to test the effectiveness of the arrangement of the arrangement of the invention tests were effected on a simple conveyer system. The results are given in Table 1 at various speeds.

The test rig was set up with all parameters carefully adjusted for efficient working.

The noise values in dBA are given for a standard 8.20 cm stainless steel straight run slat type conveyer.

In columns 1 and 2 the noise levels generated by the conveyor immediately adjacent the idler wheel (1) and the 21 tooth sprocket wheel (2) are given.

These values are compared in column (3) with the same values achieved at various running rates when the idler wheels and sprocket wheels of the invention are used.

In the first place there is no measurable difference between the noise generated by the idler and sprocket wheels of the invention, and further there is a reduction of 3-6dBA @ at 100ft/min to 7-8dBA at 400ft/min. The results are improved with a soap/water lubricant.

It will be appreciated that these values relate to a conveyor in new condition. A worn conveyor is significantly more noisy; generating noise levels of up to 80-85dBA. In the latter case the invention is much more effective in noise reduction, reducing noise levels by 10 and sometimes up to 15dBA.

**TABLE I**

| NOISE LEVELS FROM TEST CONVEYER 8.2 cm STAINLESS STEEL SLAT STRAIGHT RUNNING TYPE | | | | |
|---|---|---|---|---|
| SPEED FT/MIN | IDLER WHEEL (DRY) | 21 TOOTH SPROCKET (DRY) | NEW DESIGN IDLER WHEEL (DRY) OR SPROCKET WHEEL | NEW DESIGN LUBRICATED IDLER WHEEL OR SPROCKET WHEEL |
| 100 | 65 | 62 | 59 | 56 |
| 200 | 73 | 71 | 64 | 61 |
| 300 | 77 | 77 | 70 | 66 |
| 400 | 79 | 80 | 72 | 68 |
| Levels shown in dBA | | | | |

## Claims

1. A slat conveyor (1) comprising a conveyor bed (2), an endless belt of slats (4) in operative interconnection with each other for translational movement along the bed, and an assembly of drive means (2) for imparting motion to said belt and at least one idler wheel (13);
characterised in that the drive means is provided with a contact surface (14.22) for operative engagement with the lower face of each successive slat said contact surface comprising a layer of a resilient energy absorbing material.

2. A conveyor according to Claim 1 wherein each contact surface (22) is overlaid by a discrete energy absorbing element positioned on the underside of the slat (4) for contact with the drive means (20) and/or idler wheel (13).

3. A conveyor according to Claim 1 wherein the energy absorbing material is in the form of a continuous or discontinuous ring (14) disposed about the circumference of a member (19.21) of the drive means (20) and/or idler wheel (13) for contact with the underside of each slat (4).

4. A conveyor according to any of the preceding Claims wherein the energy absorbing material (14.22) has a circular, ovoid or flat cross-sectional configuration.

5. A conveyor according to Claim 4 wherein the energy absorbing material further has a convex or concave profile as the contact surface.

6. A conveyor according to any of Claims 3 to 5 wherein the energy absorbing material is retained in a channel (18) on the circumference of a member of the drive means and/or idler wheel.

7. A conveyor according to Claim 1 wherein the material forming the energy absorbing material is formed into a member of the drive assembly.

8. A conveyor according to any of Claims 3 to 7 wherein the energy absorbing material is in the form of a pair of spaced 'O' rings situate adjacent the edges of a member forming either the drive means or the idler wheel.

9. A conveyor according to any preceding Claim wherein the energy absorbing material is in the form of a discontinuous plurality of strips (22) parallel to the drive axis of a member of the drive assembly and is disposed about a periphery thereof.

10. A conveyor according to any preceding Claim wherein the energy absorbing material is a polyurethane, a natural or synthetic rubber, or a polyurethane foam.

11. A conveyor according to any preceding Claim wherein the energy absorbing material has a shore hardness between 50 and 90A.
